# EUROPÄISCHE PATENTANMELDUNG

(11) **EP 1 882 706 A2**
(43) Veröffentlichungstag der Anmeldung: **30.01.2008**
(21) Anmeldenummer: 07014635.2
(22) Anmeldetag: 26.07.2007
(51) Int. Cl.: C08F 214/06, C08K 5/00, F16L 11/04, F16L 55/165

(54) **Kunststoff für die Herstellung von Rohrleitungen**

(30) Priorität: 27.07.2006 DE 202006011523 U
(71) Anmelder: REHAU AG + Co, 95111 Rehau (DE)
(72) Erfinder: Schlegel, Alexander, 95111 Rehau (DE)

(57) **Zusammenfassung**

Die Zusammensetzung gemäß der vorliegenden Erfindung, basierend auf Polyvinylchlorid (PVC), mit einer Glasübergangstemperatur zwischen 40 und 45 °C, ist geeignet für die Herstellung von Rohren und Formteilen mit einer verbesserten Rückstellung, einer verbesserten Verklebbarkeit und einer verbesserten Beständigkeit gegenüber Mikroben-Bewuchs.

## Beschreibung

Die Erfindung betrifft eine Zusammensetzung, die auf Polyvinylchlorid (PVC) basiert und die besondere Eigenschaften hinsichtlich Rückverformbarkeit nach dem Einwirken einer Kraft, Verklebbarkeit und Widerstandsfähigkeit gegen Mikrobenbewuchs vereint.

Zusammensetzungen, die auf PVC basieren, sind in großer Zahl bekannt.

Anwendung finden diese Zusammensetzungen auf den vielfältigsten Gebieten, sei es in der Medizintechnik, in der Elektrotechnik, in Automobilanwendungen, im Verpackungswesen, bei der Haustechnik oder im Rohrleitungsbau.

Wegen ihrer überragenden Eigenschaftskombinationen werden auf PVC basierende bzw. PVC-haltige Zusammensetzungen gerade für Rohrleitungen in umfangreichen Anwendungsbereichen in vielfältiger Weise genutzt.

Insbesondere die attraktive sogenannte U-Liner-Technik, die zur grabenlosen Rohrsanierung angewandt wird, und bei der ein Rohr zur Verringerung des Durchmessers derart verformt wird, dass eine angenäherte U-Form resultiert, ist eine wichtige Anwendung.

So ist aus der EP 0 593 564 B1 ein Verfahren zur Sanierung unter Einsatz derartiger U-Liner-Rohre bekannt, das allerdings mit einer Reihe von Nachteilen behaftet ist.

So ist bekannt, dass EVA-modifizierte PVC-Zusammensetzungen, wie sie gemäß der Lehre der vorstehend bezeichneten Druckschrift einzusetzen sind, schwierig herzustellen sind, da die Bildung von 2-Phasen-Systemen vermieden werden muss, um keine Materialversprödung zu erhalten.

Weiterhin haben EVA-modifizierte PVC-Zusammensetzungen auf Grund der Klebeneigung des EVA und der Verschlechterung der Thermostabilität durch die Abmischung ein sehr enges Verarbeitungsfenster, das insbesondere bei der Rückstellung der Rohre hinderlich ist.

Die Rückverformung des Rohres nach Einziehen / Verlegung bedingt die Anwendung von Drücken und teilweise hoher Temperaturen.
Hierbei wird die Rohrwandung warm und stellt sich nach und nach in die Ausgangsform zurück.
Das Rückstellen ist dabei meist nicht vollständig.

Die Verklebbarkeit beim bisherigen Stand der Technik ist nicht oder nur sehr eingeschränkt auf Grund der Materialauswahl möglich.
Es bereitet deshalb mitunter beträchtliche Schwierigkeiten, Anschlüsse an die Leitung herzustellen, die dicht sind und auch einwirkenden Kräften widerstehen können.

Auf Grund der Weichmachergehalte sind die Rezepturen nach dem Stand der Technik einem erheblichen Mikrobenbefall ausgesetzt, als Abhilfe werden den Zusammensetzungen teils große Mengen an Bioziden zugesetzt, was unter ökologischen wie auch unter hygienischen Gesichtspunkten höchst unerwünscht ist.

Diese Nachteile begrenzen die Nutzung von U-Linern nach dem Stand der Technik.

Hier setzt die Erfindung ein, die sich zur Aufgabe gestelit hat, eine auf PVC basierende Zusammensetzung anzugehen, die die geschilderten Nachteile des Standes der Technik überwindet und besondere Eigenschaften hinsichtlich Rückstellvermögen, Verklebbarkeit und Mikroben-Bewuchs aufweist.

Erfindungsgemäß besteht die Zusammensetzung gemäß Anspruch 1 aus einem auf Polyvinylchlorid basierenden Material mit einer Glasübergangstemperatur zwischen 40 und 45°C.

Insbesondere kann die erfindungsgemäße Zusammensetzung ein Polyvinylchlorid-Butylacrylat-Copolymer enthalten.
Der Anteil an Butylacrylat beträgt im Copolymer maximal 10 %.

Die Zusammensetzung lässt sich gemäß der vorliegenden Erfindung dann vorteilhaft für die Herstellung und Anwendung von U-Linern einsetzen, wenn zusätzlich zu dem vorstehend beschriebenen Polyvinylchlorid-Butylacrylat-Copolymer noch ein Weichmacher enthalten ist. Dieser ist insbesondere ein Adipatweichmacher ohne Versprödungseffekt, der mit einem Anteil von 0 bis 30 phr zugegeben wird.

Es kann auch vorgesehen sein, der Zusammensetzung Füllstoffe zuzugeben.
Der Füllstoff kann bis 40 phr in der Zusammensetzung enthalten sein.

Als Füllstoff eignet sich dazu Calciumcarbonat, das in einem Anteil von 0 bis 40 phr in der Zusammensetzung enthalten sein kann.

Darüber hinaus ist es von Vorteil, wenn der Zusammensetzung noch Stabilisatoren und Pigmente, sowie ggf. Verarbeitungshilfsstoffe, beispielsweise Gleitmittel, wie sie aus dem Stand der Technik bei der Rezeptierung von auf PVC basierenden Zusammensetzungen bekannt sind, zugefügt werden.
Die der Zusammensetzung zugefügten Stabilisatoren, Gleitmittel und Pigmente können zu 2 bis 5 phr enthalten sein.

In einer anderen Ausführungsform der Erfindung kann ein Polyvinylchlorid-Ethylvinylacetat-Copolymer mit einem maximalen Anteil von Ethylvinylacetat (EVA) von 10 % eingesetzt werden.

Der Zusatz weitere Komponenten zur Zusammensetzung orientiert sich dabei an den vorstehend beschriebenen Größenordnungen.

In einer dritten Ausführungsform der vorliegenden Erfindung kann anstelle eines Polyvinylchlorid-Copolymer auch ein S-PVC eingesetzt werden.

Es ist hierbei besonders vorteilhaft im Sinne der vorliegenden Erfindung, wenn S-PVC mit K-Werten von 65 bis 68 verwendet wird.

Auch hierbei werden der Zusammensetzung - wie vorstehend ausgeführt - weitere Komponenten zugesetzt.

Der Zusammensetzung kann zur Verbesserung der mechanischen Kennwerte insbesondere der Schlagzähigkeit in der Kälte, eine Schlagzähkomponente zugegeben werden.
Eine solche Schlagzähkomponente, oder ein Schlagzähmodifier, kann auf Basis eines Acrylats oder eines Methacrylat/Butadien/Styrol-Copolymers (MBS) oder eines chlorierten Polyethylens (CPE) ausgewählt sein.
Die Zugabemenge in die Zusammensetzung beträgt dabei 0 bis 10 phr.

Es kann sich als vorteilhaft erweisen, wenn der Zusammensetzung eine geringe Menge einer fungizid wirksamen Substanz, wie z. B. 4,5-Dichlor-2-n-octyl-isothiazolin-3-on (DCOIT), zugesetzt wird, weil dadurch die sehr geringe Neigung der erfindungsgemäßen Zusammensetzung zum Mikroben-Bewuchs weiter reduziert wird.
Eine typische Zugabemenge ist hierbei 0.12 bis 0.20 phr.

In einer alternativen Ausführungsform können aber auch Abmischungen aus einem PVC-Butylacrylat-Copolymeren mit einem maximalen Anteil von 55 % Butylacrylat zusammen mit S-PVC gemäß der vorliegenden Erfindung eingesetzt werden, wobei das Copolymer 5 bis 20 phr Anteil und das S-PVC entsprechend 80 bis 95 phr Anteil hat.

Auch kann in einer weiteren Ausführungsform eine Mischung aus einem PVC-EVA-Copolymer mit einem maximalen Anteil von 55 % EVA in Kombination mit S-PVC eingesetzt werden.
Der Anteil Copolymer ist dabei 5 bis 20 phr, der des S-PVC's 80 bis 95 phr.

Zur Erleichterung der Aufbereitung / Einarbeitung der Adipatweichmacher kann der Rezeptur ein Anteil Phthalatweichmacher kleiner 5 Gew.-% zugesetzt werden.

Dadurch ist sichergestellt, dass die Einarbeitung des Weichmachers gleichmäßig und homogen in der Zusammensetzung erfolgt.

Im Rahmen der vorliegenden Erfindung wurde erkannt, dass es wesentlich für das Rückverformen ist, wenn die Glasübergangstemperatur niedrig liegt.

Als besonders vorteilhaft hat sich dabei ergeben, wenn die Zusammensetzung derart gewählt wird, dass eine Glasübergangstemperatur zwischen 40 und 45 °C vorliegt

Es gelingt dann unter Anwendung von vergleichsweise niedrigen Drücken und Temperaturen, die Rückverformung praktisch vollkommen durchzuführen.

Dies hat große wirtschaftliche Vorteile für den Einsatz derartiger Rohre aus der erfindungsgemäßen Zusammensetzung, die als U-Liner für die Sanierung von Rohrsystemen eingesetzt werden.

Neben der verbesserten Rückverformung, die nahezu 100 % beträgt, und die demzufolge zu dem erwünschten Formschluss zwischen dem Rohr aus der erfindungsgemäßen Zusammensetzung und dem zu sanierenden Rohr führt, ist es ein weiterer Vorteil der vorliegenden Erfindung, dass auf Grund der niedrigeren benötigten Temperaturen und Drücke zur Rückverformung auch die Verarbeitung der Rohre schneller vonstatten geht.

Insbesondere gelingt es damit, auch größere Rohrlängen in dieser Technik zu verarbeiten.

Durch die Wahl der erfindungsgemäßen Zusammensetzung ist es leicht möglich, eine Verbindung von Rohren untereinander oder von Rohren mit Fittingen etc. durch Verklebung herzustellen.

Der Anteil an Copolymer in der erfindungsgemäßen Zusammensetzung ermöglicht es, dass Kleber mit der Zusammensetzung derart wechselwirken, dass haltbare und insbesondere belastbare Klebeverbindungen, we sie für die Herstellung von Anschlüssen, Abzweigungen, etc. benötigt werden, ohne Aufwand hergestellt werden können,

Ein weitere Vorteil der erfindungsgemäßen Zusammensetzung besteht darin, dass auf Weichmacher weitestgehend verzichtet werden kann, so dass Mikroben keine oder kaum Angriffsmöglichkeiten gegeben sind.
Der Mikroben-Bewuchs kann deshalb in hohem Grade vermieden oder aber deutlichst reduziert werden.

Dies hat wesentliche Vorteile bei der Nutzung dieser Rohre in Anwendungen, bei denen es auf besondere Hygiene ankommt, wie es beispielsweise bei der Trinkwasserbereitstellung, beim Badewesen, bei der Verlegung in kontaminierten Böden oder bei Rohranwendungen in hygienisch bedenklichen Bereichen.

Die Rohre aus der erfindungsgemäßen Zusammensetzung sind hierbei im Hinblick auf die Vermeidung von Mikroben-Bewuchs solchen Rohren nach dem Stand der Technik weit überlegen.

Die Zusammensetzung gemäß der vorliegenden Erfindung wird anhand von 3 Rezepturen exemplarisch anhand Tabelle 1 gezeigt:

**Tabelle 1**

| **Rezeptur** | **Zusammensetzung** |
|---|---|
| **1** | 100 phr Polyvinylchlorid-Butylacrylat-Copolymer mit 7 % Butylacrylat |
| | 14 phr Diisodecyladipat |
| | 10 phr Calciumcarbonat |
| | 3.7 phr Stabilisatoren, Gleitmittel, Pigmente |
| **2** | 100 phr Polyvinylchlorid-Butylacrylat-Copolymer mit 7 % Butylacrylat |
| | 14 phr Diisodecyladipat |
| | 10 phr Calciumcarbonat |
| | 3.7 phr Stabilisatoren, Gleitmittel, Pigmente |
| | 0.16 phr DCOIT |
| **3** | 100 phr S-Polyvinylchlorid (S-PVC) |
| | 14 phr Diisodecyladipat |
| | 10 phr Calciumcarbonat |
| | 6 phr Acrylat-Modifier |
| | 3.7 phr Stabilisatoren, Gleitmittel, Pigmente |

Aus der Zusammensetzung werden nach bekannten Verfahren der Polymerverarbeitung Formteile hergestellt.

So können beispielsweise im Extrusionsverfahren Rohre gefertigt sein.

Gemäß der vorliegenden Erfindung ist es auch möglich, beispielsweise im Spritzgussverfahren Fittinge (Abzweigungen, Verbindungen, Kniestücke, etc.) zu fabrizieren.

Mit Hilfe anderer Techniken der Kunststoffverarbeitung können aus der erfindungsgemä-βen Zusammensetzung auch andere Formteile, wie beispielsweise Blasformteile als Behälter oder schrumpfbare Objekte - beispielsweise in Form von Schrumpfschläuchen, hergestellt werden.

Die Widerstandsfähigkeit gegen Mikroben-Bewuchs wird im sogenannten "Erdeingrabetest" ermittelt.

Hierzu wird ein Rohrstück auf einer 4 Zoll dicken Erdschicht gelagert und mit 1 Zoll Erde abgedeckt.
Die Testdauer beträgt 6 Monate bei 30 °C und einer rel. Luftfeuchtigkeit von 90 %.

Anschließend werden die Rohre gesäubert und auf Mikroben-Bewuchs untersucht, das Rohrgewicht wird vor und nach dem Test festgestellt.

Folgende Ergebnisse gemäß Tabelle 2 werden erhalten:

**Tabelle 2**

| **Rezeptur** | **Ausgangsgewicht** | **Gewicht nach Erdeingrabetest** | **Mikroben-Bewuchs** |
|---|---|---|---|
| **1** | 13.01 g | 13.01 g | kein Bewuchs |
| **2** | 15.47 g | 15.45 g | kein Bewuchs |
| **3** | 15.87 g | 15.87 g | gerade noch erkennbarer Bewuchs |

Aus der erfindungsgemäßen Zusammensetzung sind Rohre herstellbar, die verbesserte Eigenschaften hinsichtlich Rückstellvermögen, Verklebbarkeit und Widerstand gegen Mikroben-Bewuchs aufweisen.
Diese sind vorteilhaft in Form von sogenannten U-Linern zur grabenlosen Verlegung / Sanierung von Rohrleitungen nutzbar.
Die im Vergleich zum Stand der Technik leichtere Rückstellung, die bei geringerer Temperatur und bei geringerem Druck vonstatten geht, ist ebenso wie die einfache Verklebung, welche bei der Herstellung von Rohranschlüssen notwendig ist, in Kombination mit der hchen Widerstandskraft gegen Mikrobenbesiedelung ein wesentlicher Fortschritt.

Es erschließen sich dem Fachmann in nicht erfinderischer Weise ohne weiteres diverse weitere Gestaltungsmöglichkeiten, die vom Erfindungsgedanken umfasst sind.

## Patentansprüche

1. Zusammensetzung, basierend auf Polyvinylchlorid (PVC), mit einer Glasübergangstemperatur zwischen 40 und 45 °C für die Herstellung von Rohren und Formteilen mit einer verbesserten Rückstellung, einer verbesserten Verklebbarkeit und einer verbesserten Beständigkeit gegenüber Mikroben-Bewuchs.

2. Zusammensetzung gemäß Anspruch 1, wobei ein Polyvinylchlorid-Butylacrylat-Copolymer enthalten ist.

3. Zusammensetzung gemäß Anspruch 2, wobei das Polyvinylchlorid-Butylacrylat-Copolymer einen Anteil von maximal 10 % Butylacrylat aufweist.

4. Zusammensetzung gemäß Anspruch 1, wobei ein Polyvinylchlorid-Ethylenvinylacetat enthalten ist.

5. Zusammensetzung gemäß Anspruch 4, wobei das Ethylenvinylacetat einen Anteil von maximal 10 % Ethylenvinylacetat aufweist.

6. Zusammensetzung nach einem der vorangehenden Ansprüche, wobei eine Schlagzähkomponente enthalten ist.

7. Zusammensetzung nach Anspruch 6, wobei die Schlagzähkomponente ausgewählt ist aus einem Acrylat oder einem Methacrylat/Butadien/Styrol-Copolymers (MBS) oder einem chlorierten Polyethylens (CPE).

8. Zusammensetzung nach Anspruch 6 oder 7, wobei der Anteil an Schlagzähkomponente bis 10 phr beträgt.

9. Zusammensetzung gemäß Anspruch 1, wobei ein S-Poiyvinylchlorid enthalten ist.

10. Zusammensetzung nach einem der vorangehenden Ansprüche, wobei eine fungizid wirksame Substanz enthalten ist.

11. Zusammensetzung nach Anspruch 10, wobei die fungizid wirksame Substanz 4,5-Dichlor-2-n-octyl-isothiazolin-3-on (DCOIT) ist.

12. Zusammensetzung nach Anspruch 11, wobei 4,5-Dichlor-2-n-octyl-isothiazolin-3-on (DCOIT) in einem Anteil von 0.12 bis 0.20 phr enthalten ist.

13. Zusammensetzung gemäß Anspruch 1, wobei eine Mischung eines Polyvinylchlorid-Butylacrylat-Copolymeren mit S-Polyvinylchlorid enthalten ist.

14. Zusammensetzung gemäß Anspruch 13, wobei das Polyvinylchlorid-Butylacrylat-Copolymere maximal 55 % Butylacrylat aufweist.

15. Zusammensetzung gemäß Anspruch 13, wobei das Polyvinylchlorid-Butylacrylat-Copolymere zu 5 bis 20 phr und das S-Polyvinylchlorid zu 80 bis 95 phr enthalten ist.

16. Zusammensetzung gemäß Anspruch 1, wobei eine Mischung eines Polyvinylchlorid-Ethylenvinylacetat-Copolymeren mit S-Polyvinylchlorid enthalten ist.

17. Zusammensetzung gemäß Anspruch 16, wobei das Polyvinylchlorid-Ethylenvinylacetat-Copolymere maximal 55 % Ethylenvinylacetat aufweist.

18. Zusammensetzung gemäß Anspruch 16, wobei das Polyvinylchlorid- Ethylenvinylacetat-Copolymere zu 5 bis 20 phr und das S-Polyvinylchlorid zu 80 bis 95 phr enthalten ist.

19. Zusammensetzung gemäß einem der vorangehenden Ansprüche, wobei ein Weichmacher enthalten ist.

20. Zusammensetzung gemäß Anspruch 19, wobei der Weichmacher Diisodecyladipat ist.

21. Zusammensetzung gemäß Anspruch 19 oder 20, wobei der Weichmacher zu 10 bis 18 phr enthalten ist.

22. Zusammensetzung gemäß Anspruch 19 oder 20, wobei als weiterer Weichmacher ein Phthalatweichmacher enthalten ist.

23. Zusammensetzung nach Anspruch 22, wobei der Anteil an Phthalatweichmacher maximal 5 % des Anteils an Diisodecyladipat ist.

24. Zusammensetzung gemäß einem der vorangehenden Ansprüche, wobei ein Füllstoff enthalten ist.

25. Zusammensetzung gemäß Anspruch 22 wobei der Füllstoff Calciumcarbonat ist.

26. Zusammensetzung gemäß Anspruch 22 oder 23, wobei der Füllstoff bis 40 phr enthalten ist.

27. Zusammensetzung gemäß einem der vorangehenden Ansprüche, wobei ein Stabilisator enthalten ist.

28. Zusammensetzung gemäß einem der vorangehenden Ansprüche, wobei ein Gleitmittel enthalten ist.

29. Zusammensetzung gemäß einem der vorangehenden Ansprüche, wobei ein Pigment enthalten ist.

30. Zusammensetzung gemäß einem der vorangehenden Ansprüche, wobei der Anteil an Stabilisator, Gleitmittel und Pigment 2 bis 5 phr beträgt.

31. Rohr oder Formteil, hergestellt aus der Zusammensetzung nach einem der Ansprüche 1 bis 30.

32. Rohrsystem mit einem Rohr oder Formteil nach Anspruch 31.
